Europäisches Patentamt

European Patent Office

Office européen des brevets

(11) Publication number: **0 159 750**
**B1**

## EUROPEAN PATENT SPECIFICATION

(45) Date of publication of patent specification: **11.10.89**

(21) Application number: **85200513.1**

(22) Date of filing: **02.04.85**

(51) Int. Cl.⁴: **A 47 J 37/12**

(54) **Deep-frying device.**

(30) Priority: **02.04.84 NL 8401038**

(43) Date of publication of application:
**30.10.85 Bulletin 85/44**

(45) Publication of the grant of the patent:
**11.10.89 Bulletin 89/41**

(84) Designated Contracting States:
**BE CH DE FR GB LI NL**

(56) References cited:
**CH-A- 608 182**
**FR-A- 901 641**
**GB-A- 436 972**
**GB-A- 962 549**
**NL-A-6 508 737**
**US-A-1 397 536**

(73) Proprietor: **ATAG Keukentechniek B.V.**
**No. 1, Nijverheidsweg**
**NI-7071 CH Ulft (NL)**

(72) Inventor: **Gerritsen, Jan**
**21, Ormelstraat**
**NL-7122 DB Aalten (NL)**

(74) Representative: **Land, Addick Adrianus Gosling**
**et al**
**OCTROOIBUREAU ARNOLD & SIEDSMA P.O.**
**Box 18558**
**NL-2502 EN The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a deep-frying device according to the preamble of claim 1.

A gas-fired deep-frying pan of this kind is known from NL-A-6 508 737. Warming up of the deep-frying fat or oil in the container which is made of stainless steel sheet, takes considerable time. Also bringing the fat to the right temperature again, after that a product to be deep-fried is put in, takes some time.

The invention has for its object to provide a deep-frying device of the kind set forth above, having a shorter warming-up time.

With a deep-frying device according to the invention this is achieved with the measures of the characterizing part of claim 1. Despite the fact that the wall thickness of a cast container is greater than that of a container of stainless steel sheet, a considerably shorter warming-up time is achieved. As with a container according to the invention a very good heat transport occurs in the container itself, the container gets a very even temperature. Because of this with the gas burner more heat can be supplied without the danger that locally in the wall of the container too high a temperature occurs, overheating the deep-frying fat in contact therewith.

An additional advantage is that the product to be deep-fried is sooner ready, because the decrease in temperature of the fat by the putting in the of cold product, is compensated fast.

Further advantages of the device according to the invention are that the fat has a longer life as no overheating occurs. Also because of the especially even and low temperature of the heated container wall, a relatively small quantity of fat can suffice, as no buffer volume for preventing overheating is necessary. This additionally contributes to a shorter warming-up time.

The deep-frying device according to the invention also has a high efficiency. Especially by the radially extending ribs, covering substantially the whole surface area of the bottom and having a radially outwardly increasing height which has the same order of magnitude as the distance between adjoining ribs, a very good and smooth heat transfer and therefore a vast energy saving is achieved with regard to the known devices. It has been established that with a deep-frying device embodied in this way, 20 to 25% less gas is used, whereas the advantages mentioned above are still achieved.

An embodiment of the deep-frying device according to the invention which is favourable in view of manufacturing technique, is achieved when according to another aspect of the invention the discharge means comprise a wall cast to the container and extending over a considerable part of the periphery of the container to below the level of the bottom surface. In this way a separate combustion gas case around the container is superfluous, so that the number of parts of the deep-frying device is reduced strongly.

From CH-A-608 182 a deep-frying device having a cast container is known. The container has a vertically elongated form to obtain a specific circulation in the frying oil. The container is heated at one side, which is provided with parallel external ribs. The special form of the container leads to a large volume, only a small part of which can be used effectively. Heating up of the device therefore takes a relatively long time, and the effectivity is relatively poor due to a large outer surface of the container.

The invention will be further illustrated hereinafter, with reference to examples of embodiments of the device according to the invention, shown in the drawing.

Fig. 1 is perspective view of a deep-frying device according to the invention, with parts broken away.

Fig. 2 is a part sectional view of the device of Fig. 1, according to a plane transverse to the frontside thereof.

Fig. 3 is a bottom view of only the container of the deep-frying device, according to line III-III in Fig. 2.

Fig. 4 shows another embodiment of a container according to the invention.

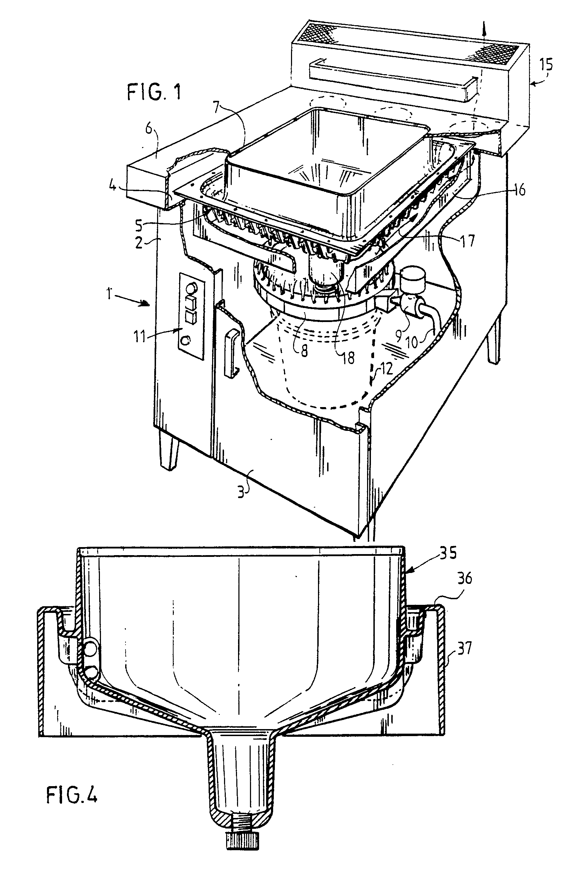

The deep-frying device 1 of Fig. 1 comprises a frame 2 in the form of a case, which at the front side is provided with a pivoting door 3. In the case 2 a horizontal mounting surface 4 is formed, in which a container 5 for deep-frying fat is mounted. According to the invention the container is made by casting from an aluminium alloy. A flange 13 is cast to the container. The container 5 rests with the flange 13 on the mounting surface 4, and is connected therewith by means of bolts. The frame 2 further comprises an upper surface 6, a downfolded edge 7 of which engages in the opening of the container 5. Below the bottom surface of the container 5 a gas burner 8 is positioned. Gas is supplied to this burner from a gas conduit 10 through a control valve.

At the front side of the case 2 a number of controls 11 known as such are provided, such as controls for adjusting the desired temperature of the deep-frying fat, and controls for a pilot flame.

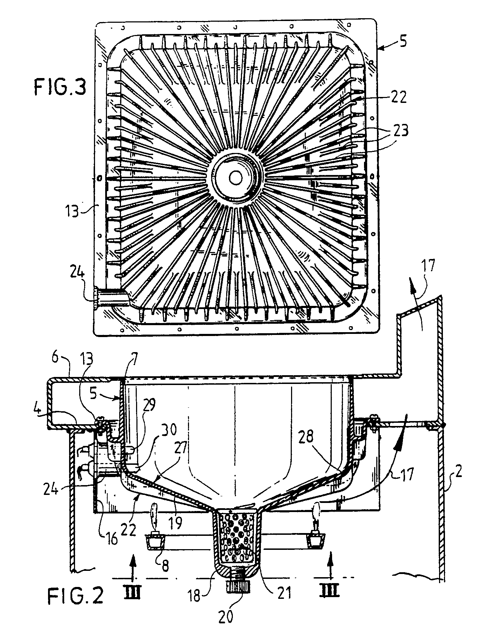

The combustion gases produced by the gas burner 8, which gases are shown with arrows 17 in Figs. 1 and 2, are discharged from the case by discharging means 15. The deepfrying device 1 can be positioned under an exhaust hood, further discharging the combustion gases out.

The discharge means 15 comprise a combustion gas case 16 extending around the container.

The bottom surface 19 of the container 5 slopes downward to the middle. In the middle of the bottom surface a sink hole 18 is formed, in which a crumb tray 21 is placed. Small parts of the products to be fried which remain in the container accumulate in the crumb tray 21 which can be taken out of the sink hole 18 and emptied regularly. Under in the sink hole 18 a screw plug 20 is arranged. When the fat has to be replaced the screw plug 20 is unscrewed, whereafter the fluid fat in the container can flow into a bucket positioned below the container. This bucket 12 is shown in Fig. 1 with broken lines.

As the container of the deep-frying device according to the invention is cast, the corners 28 therein simply can be made rounded. For cleaning the container after draining of the fat, this is very favourable.

The inside surface 27 of the container is hardened with a surface treatment known as such. This treatment, for aluminium known under the name "hard-coating", provides a scratchproof and wear-resistant inner surface. Furthermore, the aluminium treated in this way is insensitive for corrosion by the deep-frying fat.

To the bottom surface 19 of the container 5 surface area increasing elements 22 are cast. For instance these elements can be pens or ribs. According to the preferred embodiment shown in the Figures, the surface area increasing elements 22 are formed by ribs 23 extending in radial direction. These ribs provide a very good heat exchange between the hot combustion gases of the gas burner 8 and the wall of the container 5.

In Fig. 2 furthermore is shown that in the container 5 a support 24 is cast, in which channels are drilled for receiving temperature sensors 29, 30. These temperature sensors operate in a way known as such for the thermostatic control of the temperature of the deep-frying fat and for an overheating safety.

The container 35 shown in section in Fig. 4, substantially corresponds to the container 5 of the device 1 described above. The container 35 also comprises a mounting flange 36, with which it can be mounted in a frame. With this preferred embodiment a wall 37 is cast to the mounting flange 36, which wall 37 extends over a considerable part of the periphery of the container, to below the level of the bottom surface thereof. This wall 37 functions as the wall 16 of the combustion gas case in the device of Fig. 1. By embodying the container 35 in this way, the number of parts of the deep-frying device according to the invention is reduced, so that the assembling and, because of that, the manufacturing costs of the device according to the invention can be reduced.

Although the examplary embodiments of the deep-frying device according to the invention have a container with a rectangular ground form, the container can also be formed with a round ground form, as is also current.

## Claims

1. Deep-frying device (1) comprising a frame, a container (5) for a deep-frying fluid connected to the frame (2) and open at the upper side and having a funnel-shaped bottom upwardly diverging from the center thereof, a gas burner (8) positioned below the bottom (19) of the container (5) in such a way that hot gases therefrom contact substantially the whole bottom, the bottom surface (19) at the side directed to the gas burner (8) being provided with radially extending ribs (23), and discharge means (15) for discharging combustion gases (17), characterized in that the container (5) is cast from an aluminium alloy, the radially extending ribs are integrally cast and cover substantially the whole surface area of the bottom, whereas the height thereof increases in radially outward direction and is in the same order of magnitude as the distance between adjoining ribs, and in that the inside surface (27) coming into contact with the deep-frying fluid is hardened by a surface treatment.

2. Device according to claim 1, characterized in that the discharge means (15) comprise a wall (37) cast to the container (35) and extending over a considerable part of the periphery of the container (35) to below the level of the bottom surface.

## Patentansprüche

1. Fritiergerät (1) mit einem Rahmen, einem Behälter (5) für ein Fritierfluid, der mit dem Rahmen (2) verbunden ist und an der oberen Seite offen ist und einen trichterförmigen, von dessen Zentrum nach oben auseinandergehenden Boden aufweist, einem Gasbrenner (8), der unterhalb des Bodens (19) des Behälters (5) in solcher Weise angeordnet ist, daß heiße Gase davon im wesentlichen den ganzen Boden berühren, wobei die Bodenoberfläche (19) auf der dem Gasbrenner (8) zugewandten Seite mit sich radial erstreckenden Rippen (23) versehen ist, und einer Auslaßvorrichtung (15) zum Herauslassen von Verbrennungsgasen (17), dadurch gekennzeichnet, daß der Behälter (5) aus einer Aluminiumlegierung gegossen ist, die sich radial erstreckenden Rippen einstückig gegossen sind und im wesentlichen das ganze Oberflächengebiet des Bodens bedecken, wohingegen ihre Höhe in radialer Auswärtsrichtung abnimmt und von der gleichen Größenordnung ist wie der Abstand zwischen nebeneinander liegenden Rippen, und daß die mit dem Fritierfluid in Kontakt kommende innere Oberfläche (27) durch ein Oberflächenbehandlung gehärtet ist.

2. Gerät nach Anspruch 1, dadurch gekennzeichnet, daß die Auslaßvorrichtung (15) eine Wand (37) aufweist, die an den Behälter (35) gegossen ist und sich über einen wesentlichen Teil des Umfanges des Behälters (35) bis unter das Niveau der Bodenoberfläche erstreckt.

## Revendications

1. Friteuse (1) comprenant un bâti, un récipient (5) de fluide de friture, relié au bâti (2) et ouvert à sa face supérieure, ce récipient ayant un fond en forme d'entonnoir divergeant vers le haut depuis le centre, un brûleur à gaz (8) placé sous le fond (19) du récipient (5), de manière que les gaz qui en proviennent soient pratiquement au contact de tout le fond, la surface inférieure (19), du côté tourné vers le brûleur à gaz (8), ayant des nervures radiales (23), et un dispositif (15) d'évacuation des gaz de combustion (17), caractérisée en ce que le récipient (5) est formé par moulage d'un alliage d'aluminium, les nervures radiales sont moulées en une seule pièce et recouvrent pratiquement toute la surface du fond, alors que leur hauteur augmente radialement vers l'extérieur et est du même ordre de grandeur que la distance comprise entre les nervures adjacentes, et en ce que la surface interne (27) qui vient au contact du fluide de friture est durcie par traitement superficiel.

2. Dispositif selon la revendication 1, caractérisé en ce que le dispositif d'évacuation (15) comporte une paroi (37) moulée sur le récipient (35) et disposée sur une partie considérable de la périphérie du récipient (35) jusqu'à un emplacement qui se trouve au-dessous du niveau de la surface inférieure.

EP 0 159 750 B1

FIG. 1

FIG.4

FIG.3

5

22

23

13

24

FIG.2

6
13
7
5
4
29
24
30
27
28
16
22
19
8
18
20
21
III
III
17
17
2